# EUROPEAN PATENT APPLICATION

(11) **EP 3 051 409 A1**
(43) Date of publication of application: **03.08.2016**
(21) Application number: 15202753.8
(22) Date of filing: 24.12.2015
(51) Int. Cl.: G06F 3/12, H04L 29/06

(54) **DOCUMENT PRINT MANAGEMENT SYSTEM AND DOCUMENT PRINT MANAGEMENT METHOD**

(30) Priority: 28.01.2015 US 201514608031
(71) Applicant: Kabushiki Kaisha Toshiba, Tokyo 105-8001 (JP); Toshiba TEC Kabushiki Kaisha, Tokyo 141-0032 (JP)
(72) Inventor: KAWAI, Yuta, Shinagawa-ku, Tokyo 141-0032 (JP)
(74) Representative: Takeuchi, Maya

(57) **Abstract**

A document print management system comprises a storage unit in which a print management table is maintained and a processor programmed to grant or deny a request to print an electronic document on any of a plurality of image forming devices that are connected over a network according to information recorded in the print management table, so as to control a total number of times each of the electronic documents identified in the print management table can be printed by a user authorized to print the electronic document.

## Description

### FIELD

Embodiments described herein relate generally to a document print management system and a document print management method.

### BACKGROUND

A user instructs a printing device such as an MFP (Multifunctional Peripheral) and the like to carry out printing through a network from a client terminal such as a personal computer. In the related art, the number of printed pages is limited for each specific department and each individual user.

### DESCRIPTION OF THE DRAWINGS

Fig. 1 is a diagram of a networked system according to one embodiment;
Fig. 2 is a schematic diagram of a host computer and a client computer according to the embodiment;
Fig. 3 is a schematic diagram illustrating the hardware configuration of an MFP;
Fig. 4 is a block diagram of a print management section in a document print upper limit management system according to the embodiment;
Fig. 5 is a diagram illustrating an example of a print management table according to the embodiment;
Fig. 6 is a diagram illustrating operations in an initial setting stage of the print management table according to the embodiment;
Fig. 7 is a diagram illustrating an example of a screen for requesting the print management table from the host computer according to the embodiment;
Fig. 8 is a diagram illustrating operations of associating names with electronic documents in the print management table according to the embodiment;
Fig. 9 is a diagram illustrating operations carried out when changing the print management table according to the embodiment; and
Fig. 10 is a diagram illustrating operations carried out when carrying out printing by the MFP based on the print management table according to the embodiment.

### DETAILED DESCRIPTION

In accordance with one embodiment, a document print management system for managing printing of electronic documents on any one of a plurality of image forming devices that are connected over a network, comprises a storage unit in which a print management table is maintained, the print management table having a plurality of entries, each entry recording a name of an electronic document, information of a user authorized to print the electronic document on one of the image forming devices, and an upper limit value of the number of times the electronic document can be printed in an associated manner, and a processor programmed to grant or deny a request to print an electronic document on one of the image forming devices according to information recorded in the print management table, so as to control a total number of times each of the electronic documents identified in the print management table can be printed by a user authorized to print the electronic document on any of the image forming device.

Preferably, the document print management system further comprises a server connected to the image forming devices over the network, wherein the processor is implemented in the server.

Preferably, the image forming devices are each a multi-function peripheral (MFP) configured to carry out data transmission and reception with the server over the network.

Preferably, the processor is programmed to track an actual number of times the image forming devices have printed each of the electronic documents identified in the table, and the request to print an electronic document by an authorized user is granted if the actual number of times the electronic document has been printed on the image forming devices is less than the upper limit value of the number of times the electronic document can be printed on the image forming devices or denied if the actual number of times the electronic document has been printed on the image forming devices is equal to or larger than the upper limit value of the number of times the electronic document can be printed on the image forming devices.

Preferably, the actual number of times the image forming devices have printed an electronic documents is updated based on information provided by each of the image forming devices indicating how many times the image forming device has printed the electronic document.

Preferably, the request includes an ID of a user making the request and the processor is programmed to authorize the user if the ID of the user making the request matches an ID recorded in an entry of the print management table corresponding to the electronic document.

Preferably, each entry of the print management table further records a storage location of the electronic document, and the processor is programmed to select one of the image forming devices for printing the electronic document according to the storage location.

Preferably, the electronic document is transmitted to the selected image forming device along with an instruction to print the electronic document.

Preferably, the electronic document is not transmitted to the selected image forming device along with an instruction to print the electronic document.

Preferably, the processor is programmed to add an entry to the print management table in response to a new document being scanned into one of the image forming devices or a new document being faxed to one of the image forming devices.

The present invention further relates to a method of managing printing of electronic documents on any one of a plurality of image forming devices that are connected over a network, using a print management table having a plurality of entries, each entry recording a name of an electronic document, information of a user authorized to print the electronic document on one of the image forming devices, and an upper limit value of the number of times the electronic document can be printed in an associated manner, said method comprising: receiving a request to print an electronic document on one of the image forming devices; identifying the electronic document in the print management table; authorizing a user making the request using information recorded in an entry of the print management table corresponding to the electronic document; counting an actual number of times the electronic document has been printed by the user on one of the image forming devices; comparing the actual number with the upper limit value of the electronic document stored in the print management table; and blocking the printing of the electronic document on any of the image forming devices if the actual number is equal to or larger than the upper limit value.

Preferably, the print management table is stored in a server that is connected to the image forming devices over the network and the steps of receiving, identifying, authorizing, counting, comparing, and blocking are carried out by the server.

Preferably, the image forming devices are each a multi-function peripheral (MFP) configured to carry out data transmission and reception with the server over the network.

Preferably, the actual number is updated based on information provided by each of the image forming devices indicating how many times the image forming device has printed the electronic document.

Preferably, the method further comprises : instructing one of the image forming devices to print the electronic document if the actual number is less than the upper limit value.

Preferably, each entry of the print management table further records a storage location of the electronic document and one of the image forming devices is selected for printing the electronic document according to the storage location.

Preferably, the electronic document is transmitted to the selected image forming device along with an instruction to print the electronic document.

Preferably, the electronic document is not transmitted to the selected image forming device along with an instruction to print the electronic document.

The present invention further relates to a document print management system for a plurality of image forming devices that are managed by a server over a network, wherein a request to print an electronic document is received by the server and directed to one of the image forming devices by the server, comprising: a storage unit for the server in which a print management table is maintained, the print management table having a plurality of entries, each entry recording a name of an electronic document, information of a user authorized to print the electronic document on one of the image forming devices, a storage location of the electronic document, and an upper limit value of the number of times the electronic document can be printed in an associated manner; and a processor of the server programmed to: (i) add an entry to the print management table in response to a new document being scanned into one of the image forming devices or a new document being faxed to one of the image forming devices; (ii) grant a request to print an electronic document on one of the image forming devices if an actual number of times the electronic document has been printed on one of the image forming devices has not reached an upper limit value recorded in an entry of the print management table corresponding to the electronic document; and (iii) select one of the image forming devices for printing according to a storage location recorded in the entry of the print management table corresponding to the electronic document.

Preferably, the method further comprises: adding an entry to the print management table in response to a new document being scanned into one of the image forming devices or a new document being faxed to one of the image forming devices.

The present invention further relates to a document print management system for a plurality of image forming devices that are managed by a server over a network, wherein a request to print an electronic document is received by the server and directed to one of the image forming devices by the server, comprising: a storage unit for the server in which a print management table is maintained, the print management table having a plurality of entries, each entry recording a name of an electronic document, information of a user authorized to print the electronic document on one of the image forming devices, a storage location of the electronic document, and an upper limit value of the number of times the electronic document can be printed in an associated manner; and a processor of the server programmed to: (i) add an entry to the print management table in response to a new document being scanned into one of the image forming devices or a new document being faxed to one of the image forming devices; (ii) grant a request to print an electronic document on one of the image forming devices if an actual number of times the electronic document has been printed on one of the image forming devices has not reached an upper limit value recorded in an entry of the print management table corresponding to the electronic document; and (iii) select one of the image forming devices for printing according to a storage location recorded in the entry of the print management table corresponding to the electronic document.

Hereinafter, the system according to the embodiment is described as non-limiting examples, with reference to the accompanying drawings.

### <Configuration of Entire System>

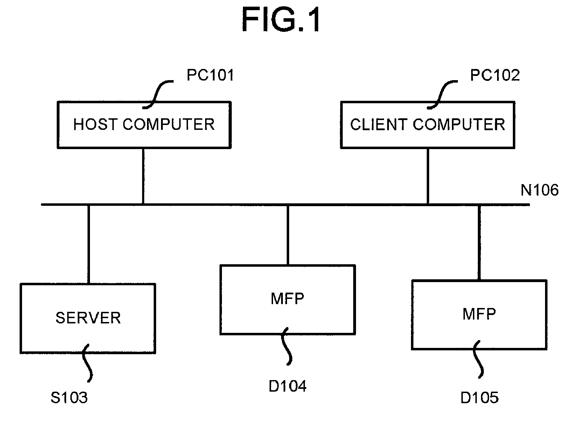

Fig. 1 is a diagram of a networked system in an office according to the embodiment.

A client computer PC102 (for example, a personal computer) serving as a client terminal, a server S103 for managing print output, an MFP D104 and an MFP D105 are capable of communicating with each other through a local area network (LAN) N106. A PC101 is an example of a host computer mainly used by a system manager. Generally, a plurality of client computers is connected.

The entire function of each section in the embodiment is schematically described below. Basic information is input from the host computer PC101, and the basic configuration of a print management table is initially set up (table initial setting stage). In this stage, the limits on the document printing is not specified. In the next stage, the document on which printing limits are to be applied is input from any MFP, and an electronic document is generated and specified. The electronic document may be an electronic file generated by scanning a paper document or a facsimile file received by the MFP from another MFP or device. In any case, a document name is associated with the electronic document (electronic document association stage).

The document name may be a series of numbers or a file name that is uniquely assigned according to a predetermined rule when the electronic file is created in the MFP. The document name may also be the text acquired by scanning a front cover (first page) and the like and performing optical character recognition. In this stage, the document name is associated with the corresponding electronic document, and the print management table is completed. The table initial setting stage and the electronic document association stage are a preparation stage for carrying out the print management according to embodiments.

The following description assumes that the print management table completed in a way described above is stored in the server; however, embodiments are not limited to this, and the print management table may be stored in each MFP. The print management table is used for print management such as the later-described limitation of the number of print outputs (print management stage: table use stage). The upper limit value of the number of print outputs can be changed even after the print management table is completed or in a stage in which the number of print outputs is limited based on the table. This is referred to as a table change stage in which the print management table is corrected or otherwise modified.

### <Configurations of Personal Computer and Server>

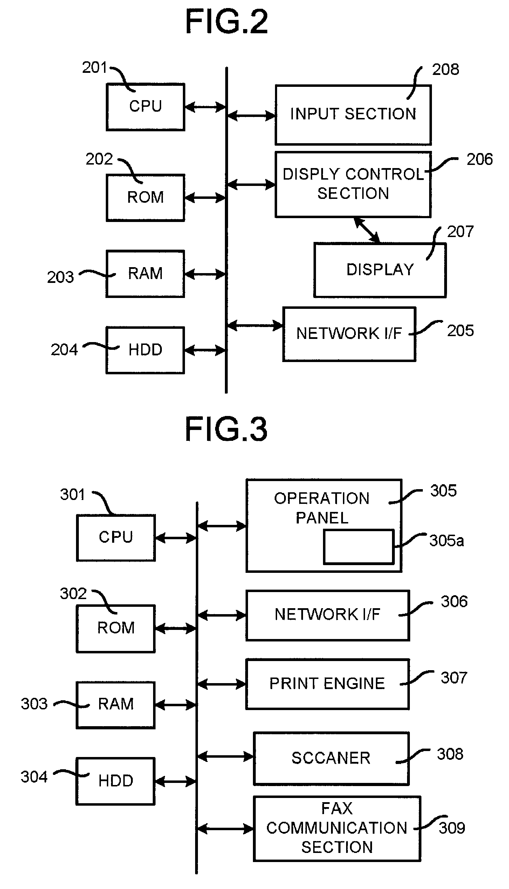

The host computer PC101, the client computer PC102 and the server S103 in the present embodiment may be general information processing apparatuses such as general personal computers and the like. For example, the hardware configuration is as shown in Fig. 2.

201 is a CPU (Central Processing Unit) for controlling the entire apparatus, and 202 is a read only memory (ROM) for storing BIOS and boot programs in advance. 203 is a random access memory (RAM) used as a work area of the CPU 201. 204 is a hard disk drive (HDD) in which an OS, applications, drivers, various programs, data files and the like are stored.

205 is a network interface (I/F), and 205 is, e.g., an Ethernet® card in the present embodiment, but a wireless LAN card may also be used. 206 is a display control section in which a video controller is arranged to generate and output image data stored in a video memory as a video signal under the control of the CPU 201. 207 is a display device, and liquid crystal display and CRT are representative display devices. 208 is an input section such as a keyboard, a mouse and the like.

In the configuration described above, when the power source of the apparatus is turned on, the CPU 201 loads the OS from the HDD 204 to the RAM 203 and loads various device drivers according to the boot programs stored in the ROM 202. Further, the program equivalent to the configuration shown in Fig. 2 is loaded in the RAM 203 to be executed.

### <Configuration of MFP>

Fig. 3 is a block diagram illustrating the hardware configuration of the MFP (D104 and D105). In Fig. 3, 301 is a CPU (Central Processing Unit) for controlling the entire MFP, and 302 is an ROM for storing font data and control programs of the MFP executed by the CPU 301.

303 is an RAM that is used as a receive buffer and a work area of the CPU 301 and used in generating image data. 304 is a hard disk drive (HDD) for recording various programs, client information, image data and the like. 305 is an operation panel consisting of various switches and buttons, and a liquid crystal display section for displaying messages. The operation panel 305 includes an ID card reader 305a for reading an ID for user recognition described later.

306 is a network interface (I/F) for connecting the MFP with an external machine such as a server and the like through network. 307 is a print engine for driving a printer to carry out printing on recording paper. 308 is a scanner for reading a paper document such as a manuscript and the like and generating electronic data. 309 is a FAX communication section for sending and receiving facsimile.

The server S103 includes a print management section for storing a table in which the maximum number of printings of each document is set for each department or individual user. The table is referred to as a print management table T400.

The print management table T400 is generally created in the server S103, and the copy of the print management table T400 is sent to the MFPs D104 and D105.

### <Print Management Section 400>

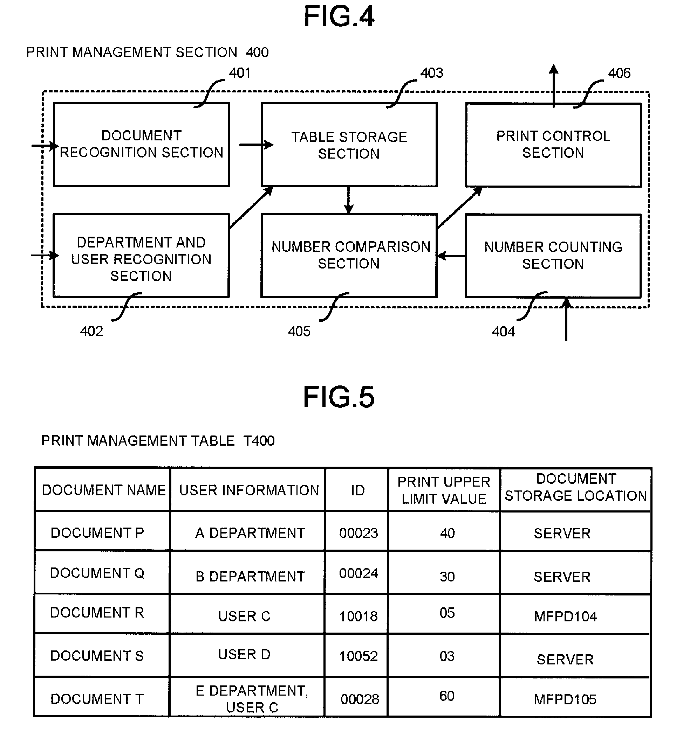

An example of the functional configuration of the print management section 400 for the document is shown in Fig. 4. An example of the print management table T400 is shown in Fig. 5. The print management section 400 includes a document recognition section 401, a department and user recognition section 402, a table storage section 403 for storing the print management table T400, a number counting section 404, a number comparison section 405 and a print control section 406. In the embodiment described herein, the print management section 400 and each of the sections therein are implemented as software executing in the CPU 201 of the server S103.

The document recognition section 401 recognizes the input document name (file name), in this way, the document name input from the input section of the host computer shown in Fig. 2, or the document name scanned by the scanner 308 under the operation of the operation panel 305 of the MFP shown in Fig. 3 or input from the operation panel 305 is acquired. The department and user recognition section 402 recognizes the department name or user name stored in the ID card read by an ID card reader (305a) arranged in the operation panel shown in Fig. 3 in a table use mode.

The number counting section 404 counts the number of print outputs of the document. The number counting section 404 counts the number of printings controlled by the print engine 307 of the MFP shown in Fig. 3. In addition, the documents include paper documents and electronic documents. The electronic document is simply referred to herein as a document, while the paper document is referred to as paper document.

The number comparison section 405 compares the number (preset and stored in the print management table) of printings that a corresponding department or user can output with the number counted by the number counting section 404. The print control section 406 sends a control signal indicating whether or not the printing can be carried out according to the comparison result of the number comparison section 405 to the print engine 307 of the MFP, and if the counted number is larger than the allowed print output number and therefore the printing cannot be carried out, the print control section 406 displays a message indicating the foregoing information on a display section of the operation panel 305.

Each of these sections consists of, as hardware, a CPU for controlling the whole server S103, a RAM that can store information and can be read, and the like. The document name, information (department name, individual user name) of the user allowed to print the document, ID (recognition sign) of the corresponding user information, the number of printings of the document (print upper limit value) that can be output by a corresponding department or an individual user, and document storage location are associated with each other in the print management table T400. The ID corresponding to the user information is stored in the server S103.

For example, a document P can be printed by a person belonging to A department having an ID of 00023, the allowed number of printings is 40, and the electronic document thereof is stored in the server. The number of the departments/users that can print the document is not limited to one. For example, the document T can be printed by a person belonging to E department and a user C.

Such a print management table T400 is first created in a table storage section as initial setting and associated with the electronic document (table creation mode). Then the management of the number of printings is carried out using the created table (table use mode).

The electronic document associated with the document name may be stored in a specific MFP and uploaded to the server S103. As shown in Fig. 5, the document storage location is associated with each document name in the print management table T400. In a case in which the document storage location is the server S103, the document is stored in, for example, the HDD 204 shown in Fig. 2, and in a case in which the document storage location is the MFP, the document is stored in, for example, the HDD 304 shown in Fig. 3.

If there is a possibility that the electronic document is printed in a plurality of MFPs, it is preferred to upload the document to the server, and if there is a high possibility that the electronic document is printed in a specific MFP, it is preferred to store the document in the MFP. In this way, the printing job can be carried out efficiently.

In addition, the document can be stored in an input MFP and uploaded to the server at the same time.

In the table initial setting stage, the print management table T400 is input from the host computer PC101 and created in the server S103. The electronic document managed in this table is input in the MFP. The print management table created and completed in the way described above is stored in the server S103, the newest data of the print management table is copied to each MFP, and the management condition of the newest number of printings is displayed in the print output process. That is, in the table use mode during which the table is used, the user can determine whether or not the printing can be carried out in each MFP.

A manager of the system can set the user information, the print upper limit value and the like in a database of the server S103 from, for example, the specific host computer PC101 using a dedicated management application, a Web browser and the like. The database of the print management table T400 can be created and changed using a general technology such as an SQL database, an Active Directory and the like.

The print management section 400 manages the upper limit value of the number of print output and the actual value (print counter) with ID, and has an upper limit management function for managing the upper limit of the number of print output and stopping the printing if the number of print output reaches the print upper limit value (allowed print output number). The document printing in the MFP (D104 and D105) is allowed or blocked based on the print management table.

The user and the system manager are described below. The system manager is a person who creates and changes the print management table from the host computer and the like. The user is a person who is identified in the print management table as a person who receives a printing limit. The user includes departments and individual users. In the following description, it should be recognized that the individual user is sometimes simply referred to as user.

### <Description of Operations in Embodiment>

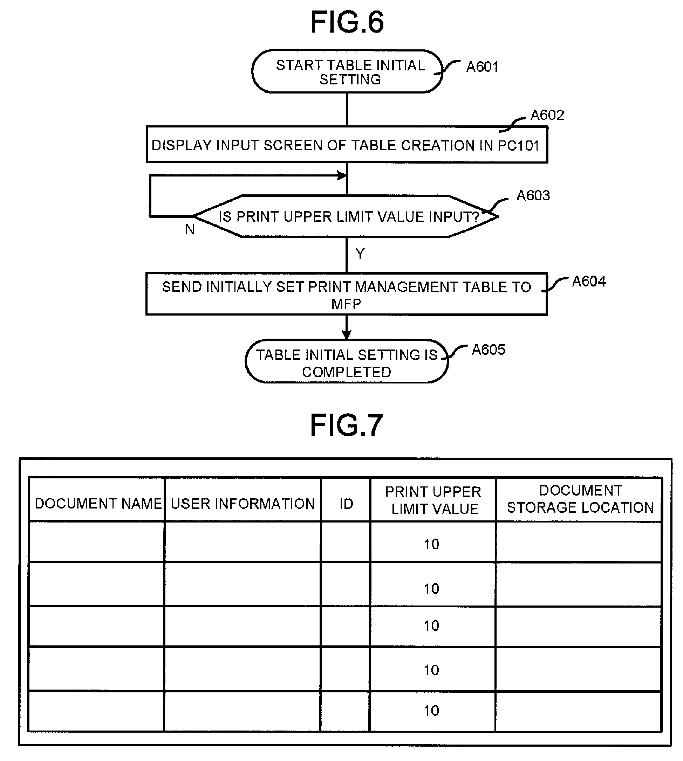

Next, the operations of the document print management system are described below with reference to the accompanying drawings. First, the table initial setting stage is described with reference to the flowchart shown in Fig. 6. When the initial setting processing of the print management table is started (A601), first, the print management table is read from the server S103 and an input screen is displayed on the display section of the host computer PC101 (A602).

Next, the system manager of the host computer PC101 clears the document name and the user information (department name, user name), and inputs, for example, 10 as the default value of the allowed print output number (print upper limit value) of the document. An example of the input screen of the host computer PC101 is shown in Fig. 7.

After the default value of the allowed print output number (print upper limit value) of the document is input in the print management table T400 from the host computer PC101 in A603, the initially set table is sent to the MFP (D104 and D105) in A604. In this way, the initial setting of the print management table is completed (A605).

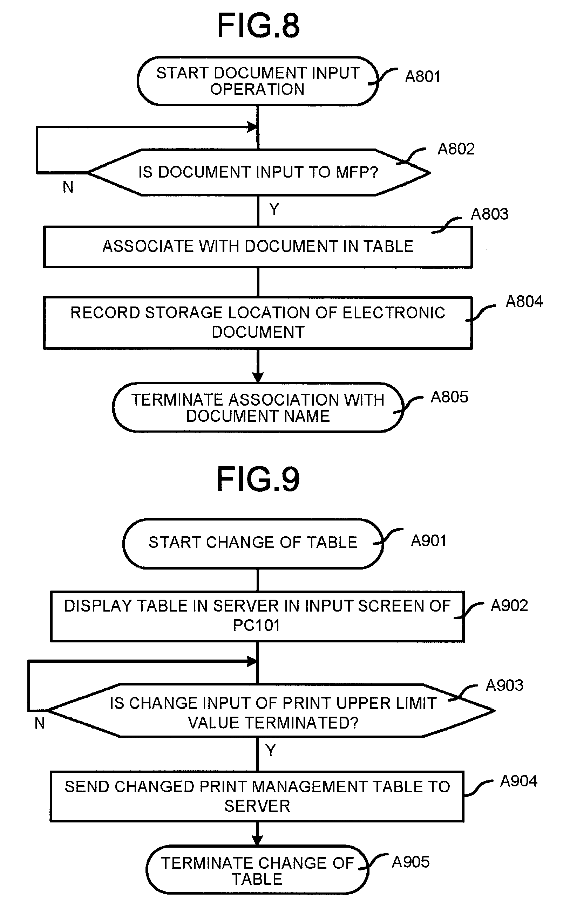

Next, the operation of associating each document name with the electronic document is described with reference to the flowchart shown in Fig. 8. When the input operation of the document is started in A801, it is determined whether or not the document is input to the MFP in A802.

The document may be input to the MFP in the following way: converting the paper document into the electronic document through the scanner 308 shown in Fig. 3; or receiving and acquiring the electronic document from an external communication machine through the network by the network I/F 306; or acquiring facsimile information through the FAX communication section 309 as the electronic document. The document name is input in the electronic document acquisition stage.

After the document is input to the MFP, the server S103 registers the electronic document and the document name in the print management table in an associated manner (A803). The server S103 may set the file name of the document input from the MFP as the document name. Next, the server S103 records the storage location of the electronic document in the column of "document storage location" (A804).

In this way, the processing of associating the document name with the electronic document is terminated in A805. The electronic documents are associated with all the document names.

Next, the operation carried out in the present system when changing the print upper limit value in the temporarily created print management table T400 is described below with reference to the flowchart shown in Fig. 9.

When the table change operation is started in A901, the table in the server is displayed in the host computer PC101 in A902. That is, the print management table T400 is displayed in the screen of the display 207 of the host computer PC101 shown in Fig. 2. The table displayed at this time is a screen in which the ID is input in the table shown in Fig. 7. An operator changes the value (allowed print output number) in the column of the print output upper limit value in the screen through a keyboard and the like.

In A903, it is confirmed whether or not the change input of the print upper limit value for the user (department, individual user) for the document name is completely terminated.

If the change input is terminated (YES in A903), the changed print management table T400 is sent to the server to update the information in the server (A904). In this way, the change of the table is terminated.

The same operation as that carried out in Fig. 9 to change the print upper limit value can be carried out to change the storage location of the electronic document in the print management table T400.

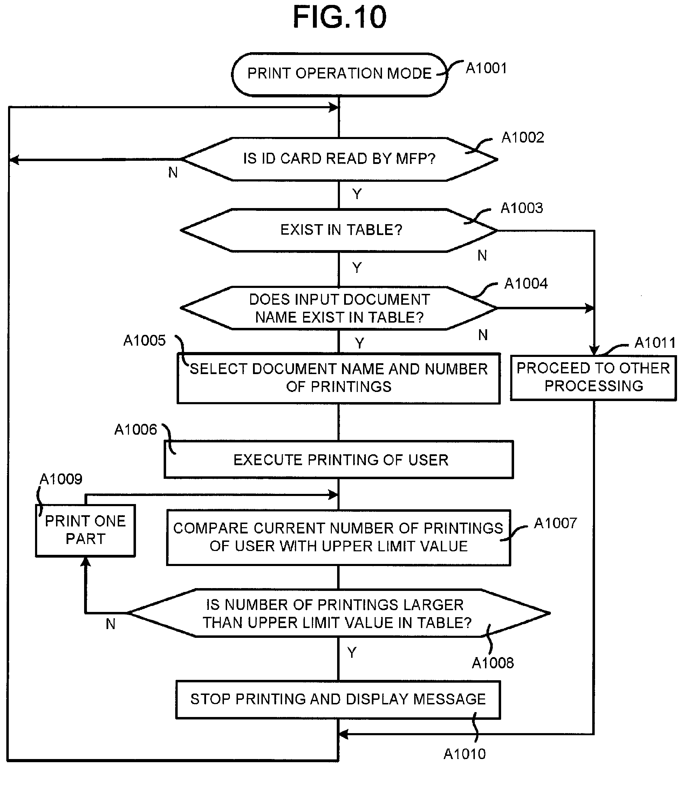

Next, the operation carried out when printing the electronic document based on the created print management table T400 is described below with reference to the flowchart shown in Fig. 10.

When the print operation mode is started in A1001, it is determined whether or not the ID card is read by the ID card reader 305a of the MFP in A1002.

The server S103 searches for a corresponding ID in the print management table T400 to determine whether or not the ID is recorded (A1003). The operation is carried out by the department and user recognition section 402 of the print management section 400.

If the ID exists in the table, A1004 is executed to check whether or not the document name corresponding to the ID exists in the print management table T400.

If the document name exists (YES in A1004), the document name, the number of print output and the upper limit value corresponding to the ID are extracted from the print management table T400 and displayed on the display section of the operation panel 305, and the user can select the document to be printed through a designation key (not shown). Further, the number of print output is set through numeric keys and the like.

On the other hand, if it is determined to be "NO" in A1003 and A1004, it can be confirmed that there is no document to be printed, thus, A1011 is executed to carry out other processing, and then A1002 is executed again.

In a case in which the ID exists in the print management table (YES in A1003) and if it is determined to be "YES" in A1004, the printing of the document is executed on the basis of the print limit (A1006).

Next, the current number of print output of the user is compared with the upper limit value in A1007, and it is detected whether or not the number of print output is larger than the upper limit value in the table in A1008. The processing involves the print management section 400.

As the print management section 400 is arranged in the server S103, thus, it is necessary to monitor the actual number of times the document has been printed in the MFP. Thus, the MFP sends the number to the print management section 400 in sequence through the network.

The corresponding print upper limit value is read from the table storage section 403 of the print management section 400 and sent to the number comparison section 405. In addition, the number of printings sent from the MFP is input in the number counting section 404. The print upper limit value and an updated number of printings are compared by the number comparison section 405 and sent to the print control section 406. The process corresponds to the processing in A1007 and A1008.

If the number comparison section 405 detects that the number of printings is smaller than print upper limit value in the table (NO in A1008), the control signal instructing to print is sent to the print control section 406, and part of the designated number of printings of the document is printed in A1009. Then the updated number of printings and the print upper limit value in the table are compared again in A1007, and it is determined whether or not the updated number of printings is larger than the print upper limit value in A1008.

When the number comparison section 405 determines that the number of printings is larger than the print upper limit value in the table (YES in A1008), a print-stop control signal for requesting to stop the print is sent to the print control section, and the print is stopped in A1010. At this time, it is preferred to display the fact indicating the message in the form of text on the display surface of the operation panel of the MFP. Then A1002 is executed again to determine whether or not the ID card is read by the ID card reader 305a.

In the embodiment described above, when carrying out printing in the MFP, the user information of the document to be printed is checked first, and then the document name is checked with reference to the print management table. However, it is also applicable to check the print management table first and then check the user information.

In the embodiment described above, the print management table is created in the server. However, the present invention is not limited to this. The print management table may be created in an individual MFP and then sent to the server. Alternatively, in a case in which it is known in advance that a special print management table is used only in a specific MFP, the table is created and stored in the MFP, and the print management table can be used in the MFP. Especially, when acquiring the electronic document in the MFP merely, it is fine to store the document in the MFP.

In the embodiment described above, the document is stored in the server or the MFP. However, the document may also be stored in a high-capacity storage device such as a server in a cloud provided separately.

In the embodiment described above, the MFP in which the scanner for scanning the paper document and the printer for carrying out print output are integrally arranged is exemplified. However, the device may be achieved by connecting, through the network, a scanner and a printer which are arranged separately to realize the function thereof.

In accordance with the embodiment described above, there is provided a document print management system in which the upper limit of the number of print output can be set for a specific document, a document print management method and a program for limiting the print amount.

While certain embodiments have been described, these embodiments have been presented by way of example only, and are not intended to limit the scope of the invention. Indeed, the novel embodiments described herein may be embodied in a variety of other forms; furthermore, various omissions, substitutions and changes in the form of the embodiments described herein may be made without departing from the framework of the invention. The accompanying claims and their equivalents are intended to cover such forms or modifications as would fall within the scope of the invention.

## Claims

1. A document print management system for managing printing of electronic documents on any one of a plurality of image forming devices that are connected over a network, comprising:
a storage unit in which a print management table is maintained, the print management table having a plurality of entries, each entry recording a name of an electronic document, information of a user authorized to print the electronic document on one of the image forming devices, and an upper limit value of the number of times the electronic document can be printed in an associated manner; and
a processor programmed to grant or deny a request to print an electronic document on one of the image forming devices according to information recorded in the print management table, so as to control a total number of times each of the electronic documents identified in the print management table can be printed by a user authorized to print the electronic document on any of the image forming devices.

2. The document print management system according to claim 1, further comprising:
a server connected to the image forming devices over the network, wherein the processor is implemented in the server.

3. The document print management system according to claim 2, wherein
the image forming devices are each a multi-function peripheral (MFP) configured to carry out data transmission and reception with the server over the network.

4. The document print management system according to claim 2 or 3, wherein the processor is programmed to track an actual number of times the image forming devices have printed each of the electronic documents identified in the table, and the request to print an electronic document by an authorized user is granted if the actual number of times the electronic document has been printed on the image forming devices is less than the upper limit value of the number of times the electronic document can be printed on the image forming devices or denied if the actual number of times the electronic document has been printed on the image forming devices is equal to or larger than the upper limit value of the number of times the electronic document can be printed on the image forming devices.

5. The document print management system according to claim 4, wherein the actual number of times the image forming devices have printed an electronic documents is updated based on information provided by each of the image forming devices indicating how many times the image forming device has printed the electronic document.

6. The document print management system according to any one of claims 2 to 5, wherein the request includes an ID of a user making the request and the processor is programmed to authorize the user if the ID of the user making the request matches an ID recorded in an entry of the print management table corresponding to the electronic document.

7. The document print management system according to any one of claims 1 to 6, wherein each entry of the print management table further records a storage location of the electronic document, and the processor is programmed to select one of the image forming devices for printing the electronic document according to the storage location.

8. The document print management system according to claim 7, wherein the electronic document is transmitted to the selected image forming device along with an instruction to print the electronic document.

9. The document print management system according to claim 7, wherein the electronic document is not transmitted to the selected image forming device along with an instruction to print the electronic document.

10. The document print management system according to any one of claims 1 to 9, wherein the processor is programmed to add an entry to the print management table in response to a new document being scanned into one of the image forming devices or a new document being faxed to one of the image forming devices.

11. A method of managing printing of electronic documents on any one of a plurality of image forming devices that are connected over a network, using a print management table having a plurality of entries, each entry recording a name of an electronic document, information of a user authorized to print the electronic document on one of the image forming devices, and an upper limit value of the number of times the electronic document can be printed in an associated manner, said method comprising:
receiving a request to print an electronic document on one of the image forming devices;
identifying the electronic document in the print management table;
authorizing a user making the request using information recorded in an entry of the print management table corresponding to the electronic document;
counting an actual number of times the electronic document has been printed by the user on one of the image forming devices;
comparing the actual number with the upper limit value of the electronic document stored in the print management table; and
blocking the printing of the electronic document on any of the image forming devices if the actual number is equal to or larger than the upper limit value.

12. The method according to claim 11, wherein the print management table is stored in a server that is connected to the image forming devices over the network and the steps of receiving, identifying, authorizing, counting, comparing, and blocking are carried out by the server.

13. The method according to claim 12, wherein
the image forming devices are each a multi-function peripheral (MFP) configured to carry out data transmission and reception with the server over the network.

14. The method according to any one of claims 11 to 13, wherein the actual number is updated based on information provided by each of the image forming devices indicating how many times the image forming device has printed the electronic document.

15. A document print management system for a plurality of image forming devices that are managed by a server over a network, wherein a request to print an electronic document is received by the server and directed to one of the image forming devices by the server, comprising:
a storage unit for the server in which a print management table is maintained, the print management table having a plurality of entries, each entry recording a name of an electronic document, information of a user authorized to print the electronic document on one of the image forming devices, a storage location of the electronic document, and an upper limit value of the number of times the electronic document can be printed in an associated manner; and
a processor of the server programmed to:
(i) add an entry to the print management table in response to a new document being scanned into one of the image forming devices or a new document being faxed to one of the image forming devices;
(ii) grant a request to print an electronic document on one of the image forming devices if an actual number of times the electronic document has been printed on one of the image forming devices has not reached an upper limit value recorded in an entry of the print management table corresponding to the electronic document; and
(iii) select one of the image forming devices for printing according to a storage location recorded in the entry of the print management table corresponding to the electronic document.
